# EUROPÄISCHE PATENTANMELDUNG

(11) **EP 2 565 684 A2**
(43) Veröffentlichungstag der Anmeldung: **06.03.2013**
(21) Anmeldenummer: 12171757.3
(22) Anmeldetag: 13.06.2012
(51) Int. Cl.: G01V 3/165

(54) **Vorrichtung und Verfahren zum Detektieren einer Stromleitung in einem Untergrund**

(30) Priorität: 15.07.2011 DE 102011079261
(71) Anmelder: HILTI Aktiengesellschaft, 9494 Schaan (LI)
(72) Erfinder: Wuersch, Christoph, 9470 Werdenberg (CH); Schoenbeck, Dietmar, 6811 Göfis (AT); Korl, Sascha, 9470 Buchs (CH); Haldner, Patrick, 9494 Schaan (LI)
(74) Vertreter: Soellner, Siegfried

(57) **Zusammenfassung**

Vorrichtung (21) zum Detektieren einer Stromleitung in einem Untergrund aufweisend eine Sensoreinheit (44) mit einem Magnetfeldsensorelement (61.1, 62.1), das zum Empfangen eines von den Eigenschaften der Stromleitung und des Untergrundes abhängigen Empfangssignals ausgebildet ist, eine Steuer- und Auswerteeinheit (46), die zum Steuern der Sensoreinheit (44) und zum Auswerten des Empfangssignals ausgebildet ist, und eine Anzeigeeinheit, die zur Anzeige des von der Steuer- und Auswerteeinheit (46) ausgewerteten Empfangssignals ausgebildet ist, wobei die Sensoreinheit (44) mindestens ein weiteres Magnetfeldsensorelement (61.2-61.4, 62.2-62.3), das zum Empfangen eines von den Eigenschaften der Stromleitung und des Untergrundes (6) abhängigen Empfangssignals ausgebildet ist, aufweist, wobei die Magnetfeldsensorelemente (61.1-61.4, 62.1-62.3) von der Steuer-und Auswerteeinheit (46) unabhängig steuerbar sind.

## Beschreibung

### Technisches Gebiet

Die vorliegende Erfindung betrifft eine Vorrichtung zum Detektieren einer Stromleitung in einem Untergrund mit den Merkmalen gemäß dem Oberbegriff des Anspruchs 1 sowie ein Verfahren zum Detektieren einer Stromleitung in einem Untergrund mit den Merkmalen gemäß dem Oberbegriff des Anspruchs 11.

Typische Objekte, die in Untergründen detektiert werden, sind Wasserrohre, Armierungseisen, Elektro- und Stromleitungen, Feuchtigkeitsansammlungen und Hohlräume. Unter dem Begriff "Objekt" sind im Rahmen dieser Patentanmeldung beliebige feste, flüssige und gasförmige Objekte, die in Untergründen eingebettet sind, zusammengefasst. Stromleitungen müssen aufgrund der Unfallgefahr beim Durchtrennen einer Stromleitung mit einer hohen Zuverlässigkeit von einer Detektionsvorrichtung erkannt werden. Eine Stromleitung ist eine stromführende Elektroleitung, die im Betrieb ein magnetisches Feld erzeugt, das zum Detektieren der Stromleitung genutzt werden kann. Telefon- oder Antennenkabel stellen zwar Elektroleitungen dar, führen aber nur einen sehr geringen Strom und fallen nicht unter die Definition des Begriffes "Stromleitung", wie er im Rahmen dieser Patentanmeldung verwendet wird.

### Stand der Technik

Bekannte Vorrichtungen zum Detektieren einer Stromleitung in einem Untergrund umfassen eine Sensoreinheit mit einem Magnetfeldsensorelement, das als Spule oder sonstiger Magnetfeldsensor (Halbleitermagnetfeldsensor, Fluxgate-Sensor, Magneto-Impedanz-Sensor) ausgebildet ist, eine Steuer- und Auswerteeinheit und eine Anzeigeeinheit. Die Anzeigeeinheit ist als LED-Anzeigeeinheit oder Signalstärkeanzeigeeinheit ausgebildet.

Der Nachteil der bekannten Detektionsvorrichtungen besteht darin, dass die räumliche Anordnung der Stromleitung im Untergrund für den Bediener nicht realitätsnah abgebildet wird. Die räumliche Anordnung der Stromleitung im Untergrund muss vom Bediener durch mehrfaches Überfahren der Stromleitung abgeleitet und auf dem Untergrund markiert werden.

### Darstellung der Erfindung

Die Aufgabe der vorliegenden Erfindung besteht demgegenüber darin, eine Vorrichtung und ein Verfahren zum Detektieren einer Stromleitung in einem Untergrund der eingangs genannten Art dahingehend weiterzuentwickeln, dass der Verlauf der Stromleitung im Untergrund für den Bediener realitätsnah visualisiert wird.

Diese Aufgabe wird bei der eingangs genannten Vorrichtung erfindungsgemäß durch die Merkmale des unabhängigen Anspruchs 1 und bei dem eingangs genannten Verfahren erfindungsgemäß durch die Merkmale des unabhängigen Anspruchs 11 gelöst. Vorteilhafte Ausgestaltungen ergeben sich aus den abhängigen Ansprüchen.

Die Vorrichtung zum Detektieren einer Stromleitung in einem Untergrund ist erfindungsgemäß dadurch gekennzeichnet, dass die Sensoreinheit mindestens ein weiteres Magnetfeldsensorelement, das zum Empfangen eines von den Eigenschaften der Stromleitung und des Untergrundes abhängigen Empfangssignals ausgebildet ist, aufweist, wobei die Magnetfeldsensorelemente von der Steuer- und Auswerteeinheit unabhängig steuerbar sind. Eine Anordnung von mehreren Magnetfeldsensorelementen hat den Vorteil, dass die räumliche Anordnung der Stromleitung im Untergrund bestimmt und auf der Anzeigeeinheit angezeigt werden kann. Als Empfangssignale nehmen die Magnetfeldsensorelemente ein Magnetfeld oder einen Magnetfeldgradienten auf.

Als Magnetfeldsensorelemente eignen sich unter anderem Spulen, Hall-Sensoren, Magneto-Impedanz-Sensoren, Magneto-Induktive-Sensoren, Fluxgate-Sensoren, Giant Magneto Resistance-Sensoren, Colossal Magneto Resistance-Sensoren und Anisotropic Magneto Resistance-Sensoren sowie alle sonstigen, zum Detektieren von Magnetfeldern geeignete Sensoren.

In einer bevorzugten Ausführungsform weist die Sensoreinheit erste und zweite Magnetfeldsensorelemente auf, wobei die ersten Magnetfeldsensorelemente ein Magnetfeld oder einen Magnetfeldgradienten in einer ersten Richtung und die zweiten Magnetfeldsensorelemente ein Magnetfeld oder einen Magnetfeldgradienten in einer von der ersten Richtung verschiedenen, zweiten Richtung erfassen. Dabei ist die zweite Richtung besonders bevorzugt senkrecht zur ersten Richtung angeordnet.

Besonders bevorzugt sind die ersten und zweiten Magnetfeldsensorelemente entlang einer horizontalen Richtung abwechselnd angeordnet. Durch die abwechselnde Anordnung entlang einer horizontalen Richtung kann die Anzahl der Magnetfeldsensorelemente, die notwendig ist, um den räumlichen Verlauf einer Stromleitung im Untergrund zu bestimmen, reduziert werden. Aus den Messwerten benachbarter Magnetfeldsensorelemente wird ein mittlerer Betrag berechnet; eine Anzahl N von ersten und zweiten Magnetfeldsensorelementen ergibt N - 1 Messwerte. Diese Art der abwechselnden Anordnung eignet sich vor allem für teure Magnetfeldsensorelemente. Bei Magnetfeldsensorelementen, die ein Magnetfeld in der ersten und zweiten Richtung an der gleichen Position messen, sind 2N - 2 Magnetfeldsensorelemente erforderlich.

Besonders bevorzugt weist die Sensoreinheit dritte Magnetfeldsensorelemente auf, die ein Magnetfeld oder einen Magnetfeldgradienten in einer von der ersten und zweiten Richtung verschiedenen dritten Richtung erfassen. Dabei ist die dritte Richtung besonders bevorzugt senkrecht zur ersten und zweiten Richtung angeordnet. Dadurch, dass das Magnetfeld oder der Magnetfeldgradient der Stromleitung in einer dritten Richtung erfasst wird, erhöhen sich die Zuverlässigkeit der Messung und die Genauigkeit der räumlichen Zuordnung der Stromleitung im Untergrund vor allem bei geneigten, krummen und/oder verdrillten Stromleitungen und bei Mehrphasenstromleitungen.

In einer weiteren bevorzugten Ausführungsform erfassen die Magnetfeldsensorelemente ein Magnetfeld oder einen Magnetfeldgradienten in einer ersten Richtung und in einer, von der ersten Richtung verschiedenen, zweiten Richtung. Besonders bevorzugt erfassen die Magnetfeldsensorelemente ein Magnetfeld oder einen Magnetfeldgradienten in einer von der ersten und zweiten Richtung verschiedenen dritten Richtung. Als Magnetfeldsensorelemente, die das Magnetfeld oder den Magnetfeldgradienten der Stromleitung in zwei bzw. drei Richtungen erfassen, eignen sich kleine, kostengünstige Magnetfeldsensoren, wie Hallelemente.

Bevorzugt weisen die Magnetfeldsensorelemente jeweils zwei Magnetfeldsensoren auf, die parallel zueinander, voneinander beabstandet angeordnet sind. Durch die parallele Anordnung von zwei Magnetfeldsensoren kann zwischen den Messwerten der Magnetfeldsensoren ein Differenzwert berechnet werden. Durch die Differenzbildung werden homogene magnetische Gleichfelder, die die Messung stören, eliminiert und die Zuverlässigkeit und Genauigkeit der Messung werden verbessert.

In einer bevorzugten Ausführung ist eine Modulationseinheit vorgesehen, die mit der Steuer-und Auswerteeinheit über eine Kommunikationsverbindung verbindbar ist und die auf einen Steuerbefehl der Steuer- und Auswerteeinheit ein Stromsignal der Stromleitung moduliert. Durch die Modulation des Stromsignals mit einem bekannten Muster lassen sich die Empfangssignale der Stromleitung besser von den Magnetfeldsensorelementen identifizieren. Die Modulationseinheit ist beispielsweise so ausgebildet, dass sie in eine Steckdose, die im Untergrund vorhanden ist, eingesteckt wird und an eine Phase der Stromleitung koppelt. Besonders bevorzugt weist die Steuer- und Auswerteeinheit ein Auswertemodul zum Demodulieren der Empfangssignale auf.

In einer bevorzugten Ausführung ist eine weitere Sensoreinheit zur Detektion eines Objektes im Untergrund vorgesehen. Dabei ist die weitere Sensoreinheit besonders bevorzugt als induktive Sensoreinheit, kapazitive Sensoreinheit, Radarsensoreinheit, Magnetfeldsensoreinheit oder als sonstige, zum Detektieren von Objekten in Untergründen geeignete, Sensoreinheit ausgebildet. In Abhängig vom Einsatzgebiet der Detektionsvorrichtung können alle bekannten Sensoreinheiten miteinander kombiniert werden.

Stromleitungen müssen aufgrund der Unfallgefahr beim Durchtrennen einer Stromleitung mit hoher Zuverlässigkeit von einer Detektionsvorrichtung erkannt werden. Durch die Verwendung mehrerer Sensoreinheiten mit unterschiedlichen Sensoreigenschaften können die Qualität und Zuverlässigkeit der Messung erhöht werden. Besonders bevorzugt weist die weitere Sensoreinheit mehrere Sensorelemente auf, die sich in mindestens einer Sensoreigenschaft von den Magnetfeldsensorelementen unterscheiden. Unter dem Begriff "Sensoreigenschaft" sind alle Eigenschaften von Sensoreinheiten, wie Sensortyp, Größe, Position, Orientierung, zusammengefasst. Die Kombination einer Sensoreinheit zum Detektieren beliebiger Objekte in einem Untergrund mit einer Sensoreinheit zum Detektieren einer Stromleitung in dem Untergrund hat den Vorteil, dass Stromleitungen von beiden Sensoreinheiten erfasst werden und die Zuverlässigkeit der Messung und die Genauigkeit bei der räumlichen Zuordnung der Stromleitung erhöht werden. Mit der Sensoreinheit zum Detektieren beliebiger Objekte lässt sich vor allem die räumliche Ausrichtung der Objekte im Untergrund bestimmen und mit der Sensoreinheit zum Detektieren einer Stromleitung wird sichergestellt, dass Stromleitungen sicher erkannt werden.

Das Verfahren zum Detektieren einer Stromleitung in einem Untergrund ist erfindungsgemäß gekennzeichnet durch den weiteren Schritt Erfassen mindestens eines weiteren Empfangssignals durch ein weiteres Magnetfeldsensorelement der Sensoreinheit. Dadurch, dass mehrere Empfangssignale von den Magnetfeldsensorelementen erfasst werden, kann eine horizontale Darstellung bestimmt werden, die den Verlauf der Stromleitung im Untergrund darstellt.

Bevorzugt werden ein erster Magnetfeldgradient in einer ersten Richtung und ein zweiter Magnetfeldgradient in einer zweiten Richtung erfasst, wobei die erste und zweite Richtung besonders bevorzugt senkrecht zueinander angeordnet sind. In einer besonders bevorzugten Variante ist vorgesehen, dass die Sensoreinheit in einer Vorschubrichtung über den Untergrund bewegt wird, der erste Magnetfeldgradient in einer zur Vorschubrichtung senkrechten horizontalen Richtung erfasst wird und der zweite Magnetfeldgradient in einer zur Vorschubrichtung und zur horizontalen Richtung senkrechten Tiefenrichtung erfasst wird. Aus den Magnetfeldgradienten in der horizontalen Richtung und der Tiefenrichtung kann der Verlauf einer Stromleitung im Untergrund bestimmt werden.

Besonders bevorzugt werden erste und zweite Magnetfeldsensorelemente in der horizontalen Richtung abwechselnd angeordnet und aus dem ersten Magnetfeldgradienten und dem zweiten Magnetfeldgradienten von benachbarten ersten und zweiten Magnetfeldsensorelementen wird jeweils ein mittlerer Betrag berechnet. Durch die abwechselnde Anordnung der Magnetfeldsensorelemente entlang der horizontalen Richtung wird die Anzahl der Magnetfeldsensorelemente, die notwendig ist, um den räumlichen Verlauf einer Stromleitung im Untergrund zu bestimmen, reduziert.

Aus den mittleren Beträgen der benachbarten ersten und zweiten Magnetfeldsensorelementen wird besonders bevorzugt von der Steuer- und Auswerteeinheit ein horizontale Darstellung berechnet, die horizontale Darstellung wird von der Steuer- und Auswerteeinheit an eine Anzeigeeinheit übertragen und auf der Anzeigeeinheit dargestellt. Der Bediener erhält aus der horizontalen Darstellung einen räumlichen Eindruck davon, wo die Stromleitung im Untergrund verläuft.

In einer bevorzugten Variante werden weitere Empfangssignale durch Sensorelemente einer weiteren Sensoreinheit empfangen. Durch die Verwendung unterschiedlicher Sensortypen oder die Verwendung eines Sensortyps mit unterschiedlichen Sensoreigenschaften werden verschiedene Objekte oder Objekte in unterschiedlichen Tiefen des Untergrundes zuverlässig detektiert.

Aus den Empfangssignalen der Sensoreinheit und den Empfangssignalen der weiteren Sensoreinheit werden in einer ersten Variante durch die Steuer- und Auswerteeinheit gemeinsame Tiefenschnittbilder und aus den gemeinsamen Tiefenschnittbildern eine gemeinsame Draufsicht berechnet. Gemeinsame Tiefenschnittbilder und eine gemeinsame Draufsicht haben den Vorteil, dass alle Objekte in einer Darstellung angezeigt werden. Außerdem wird die Zuverlässigkeit beim Detektieren einer Objektart erhöht, wenn die Objektart auf verschiedene Arten detektiert wurde.

Aus den Empfangssignalen der Sensoreinheit und den Empfangssignalen der weiteren Sensoreinheit werden in einer zweiten Variante durch die Steuer- und Auswerteeinheit getrennte Tiefenschnittbilder und aus den getrennten Tiefenschnittbildern getrennte Draufsichten berechnet. Getrennte Tiefenschnittbilder und eine getrennte Draufsicht haben den Vorteil, dass Darstellungs- und Berechnungsparameter für die Tiefenschnittbilder und die Draufsicht an den Tiefenbereich und die zu detektierenden Objekte angepasst werden können.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: die Anwendung einer erfindungsgemäßen Detektionsvorrichtung in einem Innenraum, der einen Betonboden mit einem eingebetteten Eisengitter und eine gemauerte Rückwand aus Ziegelsteinen mit horizontal und vertikal verlaufenden Elektroleitungen aufweist;
- FIG. 2A, B: eine erste Ausführungsform einer erfindungsgemäßen, handgeführten Detektionsvorrichtung in einer Ansicht auf eine dem zu detektierenden Untergrund abgewandten Oberseite der Detektionsvorrichtung (FIG. 2A) und eine im Inneren angeordnete Messeinrichtung mit einer ersten Sensoreinheit und einer zweiten Sensoreinheit in einer Ansicht auf eine dem zu detektierenden Untergrund zugewandten Unterseite der Detektionsvorrichtung (FIG. 2B);
- FIG. 3A-C: die Stromsensoreinheit der FIG. 2B mit ersten und zweiten Magnetfeldsensorelementen (FIG. 3A) sowie das erste Magnetfeldsensorelement (FIG. 3B) und das zweite Magnetfeldsensorelement (FIG. 3C) in einer vergrößerten Darstellung;
- FIG. 4: eine alternative Ausführungsform eines Magnetfeldsensorelementes für die Stromsensoreinheit der FIG. 2B;
- FIG. 5: eine Messaufnahme der Detektionsvorrichtung der FIG. 2, die entlang einer Vorschubrichtung über den zu detektierenden Untergrund bewegt wird, mit einer Draufsicht und einem Tiefenschnittbild; und
- FIG. 6: eine weitere Ausführungsform einer Stromsensoreinheit mit einer ersten Sensoreinheit und einer zweiten Sensoreinheit, die in zwei zueinander senkrechten, horizontalen Richtungen ausgerichtet sind.

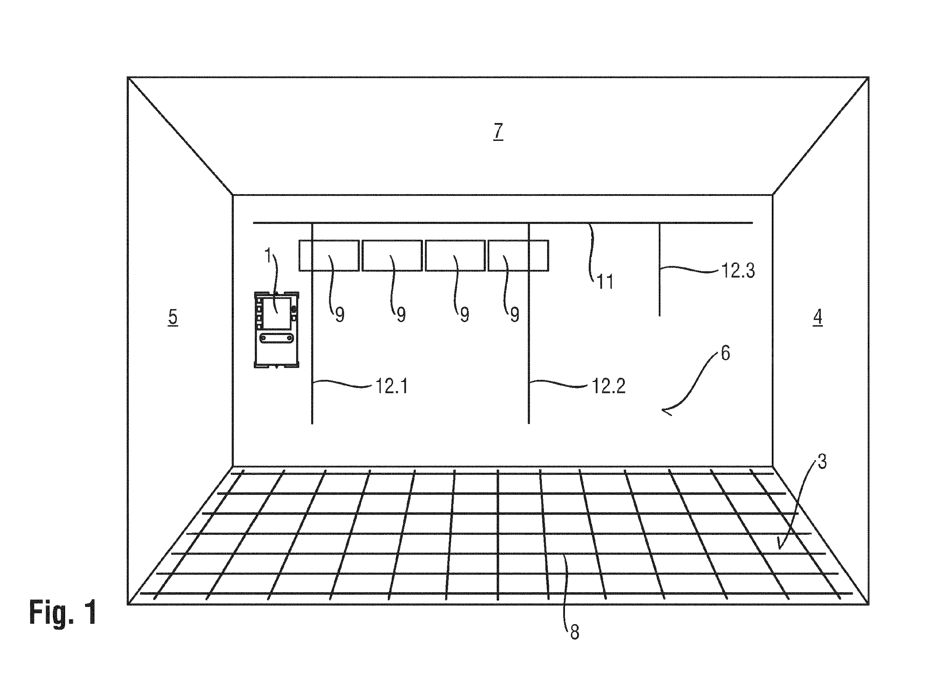

**FIG. 1** zeigt die Anwendung einer erfindungsgemäßen Vorrichtung **1** zum Detektieren einer Stromleitung in einem Innenraum **2.** Die Detektionsvorrichtung 1 ist als gehaltene oder geführte Detektionsvorrichtung ausgebildet. Eine gehaltene Detektionsvorrichtung wird ohne Vorschubbewegung über den zu detektierenden Untergrund gehalten und eine geführte Detektionsvorrichtung wird entlang einer linearen Bahn oder in einer beliebigen Bahn über einen zu detektierenden Untergrund geführt. Als handgehalten bzw. handgeführt wird eine Detektionsvorrichtung bezeichnet, die ein Bediener mit der Hand über den zu detektierenden Untergrund hält oder führt.

Der Innenraum 2 besteht aus einem Boden **3,** einer rechten und linken Seitenwand **4, 5,** einer Rückwand **6** und einer Decke **7.** Der Boden 3 besteht aus einer Betondecke mit einem eingebetteten Eisengitter **8.** Die Rückwand 6 ist aus Mauersteinen bzw. Ziegelsteinen **9** aufgebaut. In der Rückwand 7 verlaufen eine horizontal angeordnete Stromleitung **11** und drei vertikal angeordnete Stromleitungen **12.1, 12.2, 12.3,** die von der horizontal angeordneten Stromleitung 11 abzweigen.

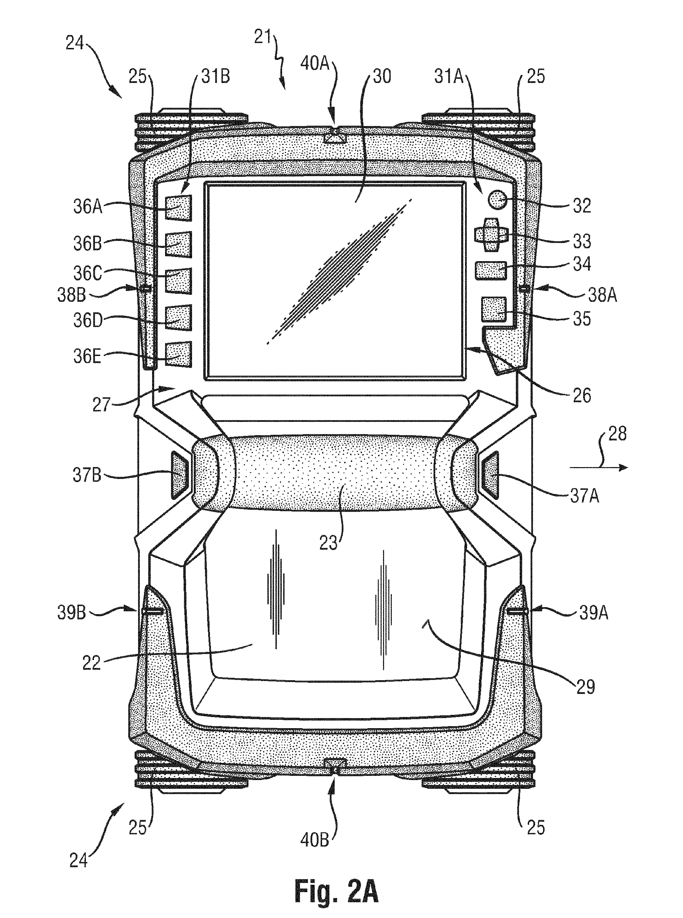

**FIG. 2A** zeigt eine erste Ausführungsform einer handgeführten Detektionsvorrichtung **21,** die ein Gehäuse **22,** einen Handgriff **23,** eine Bewegungseinheit **24** mit vier Rädern **25,** eine Anzeigeeinheit **26** und eine Bedienungseinheit **27** umfasst.

Der Benutzer führt die Detektionsvorrichtung 21 mit Hilfe des Handgriffes 23 und der Bewegungseinheit 24 in einer Vorschubrichtung **28** über einen zu detektierenden Untergrund, der beispielsweise als Boden 3 oder Rückwand 6 ausgebildet ist. Der Handgriff 23 ist auf einer dem Untergrund 3, 6 während einer Messung abgewandten Oberseite **29** der Detektionsvorrichtung 21 angeordnet und mit dem Gehäuse 22 verbunden. Die Anzeigeeinheit 26 umfasst ein Display **30,** auf dem die Messergebnisse der Detektionsvorrichtung 21 als Messaufnahme angezeigt werden.

Die Bedienungseinheit 27 dient zum Starten einer Messung und zum Einstellen der Detektionsvorrichtung 21. Die Bedienungseinheit 27 besteht aus einer ersten und zweiten Bedienungseinheit **31A, 31** B, die neben dem Display 30 auf der Oberseite 29 angeordnet sind. Die erste Bedienungseinheit 31A umfasst eine Ein/Aus-Taste **32** zum Ein- und Ausschalten der Detektionsvorrichtung 21, eine Schaltwippe **33,** mit der eine Markierungslinie oder ein Markierungskreuz in einer Darstellung auf dem Display 30 positioniert und verschoben werden können, sowie zwei weitere Bedienungstasten **34, 35.** Die zweite Bedienungseinheit 31 B umfasst fünf Funktionstasten **36A-36E** zum Aktivieren verschiedener Funktionen eines Funktionsmenüs, das auf dem Display 30 dargestellt ist. Die Bedienungseinheit 27 umfasst außerdem zwei Start/Stop-Tasten **37A, 37B,** die zum Starten und Beenden einer Messung dienen und am Handgriff 23 angeordnet sind.

Das Detektionsfeld der Detektionsvorrichtung 21 ist begrenzt und entspricht nicht der vollen Länge des Gehäuses 22. Die Begrenzung des Detektionsfeldes wird an der rechten Gehäusekante des Gehäuses 22 über eine obere und untere rechte Markierung **38A,** 39A und an der linken Gehäusekante über eine obere und untere linke Markierung **38B, 39B** angezeigt. Mit Hilfe der Markierungen kann der Bediener die Detektionsvorrichtung 21 auf dem zu detektierenden Untergrund platzieren. Die Mitte des Detektionsfeldes wird an der oberen und unteren Gehäusekante über eine obere und untere Markierung **40A, 40B** angezeigt.

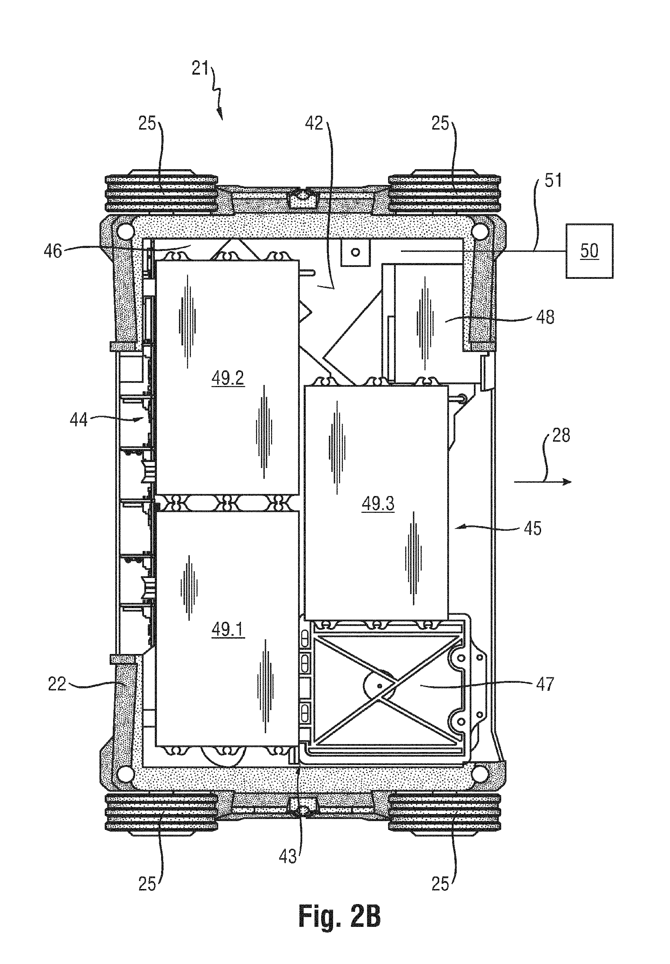

**FIG. 2B** zeigt die Detektionsvorrichtung 21 in einer Ansicht auf eine dem Untergrund während einer Messung zugewandte Unterseite **42.** An der Unterseite 42 befindet sich im Inneren des Gehäuses 22 eine Messeinrichtung **43.** Die Messeinrichtung 43 umfasst eine erste Sensoreinheit **44,** eine zweite Sensoreinheit **45,** eine Steuer- und Auswerteeinheit **46,** eine Spannungsquelle **47** und eine Koordinatenerfassungseinheit **48.**

Die Steuer- und Auswerteeinheit 46 dient zur Steuerung der ersten und zweiten Sensoreinheit 44, 45, zur Auswertung der von den Sensoreinheiten 44, 45 gelieferten Empfangssignale und zur Ausgabe eines Messergebnisses in Form einer Messaufnahme auf der Anzeigeeinheit 26. Die Steuer- und Auswerteeinheit 46 ist über Echtzeit-Kommunikationsverbindungen mit der ersten und zweiten Sensoreinheit 44, 45 und über eine weitere Echtzeit-Kommunikationsverbindung mit der Anzeigeeinheit 26 verbunden. Der Begriff "Echtzeit-Kommunikationsverbindung" umfasst neben Kommunikationsverbindungen ohne zeitliche Verzögerung auch Kommunikationsverbindungen, bei denen die zeitliche Verzögerung zwischen der Erfassung der Empfangssignale durch die Sensoreinheit und der Darstellung der Messergebnisse auf der Anzeigeeinheit 26 so klein ist, dass die Messergebnisse auf der Anzeigeeinheit 26 im Wesentlichen an der aktuellen Position der Sensoreinheit wiedergegeben werden. Die Spannungsquelle 47 ist mit der ersten Sensoreinheit 44, der zweiten Sensoreinheit 45, der Steuer- und Auswerteeinheit 46 und der Anzeigeeinheit 26 verbunden und stellt den Einheiten 44, 45, 46, 26 die für den Messbetrieb benötigte elektrische Energie zur Verfügung.

Die Detektionsvorrichtung 21 wird während der Messung in der Vorschubrichtung 28 mit der Vorschubgeschwindigkeit über den zu detektierenden Untergrund bewegt. Die Koordinatenerfassungseinheit 48 erfasst die Koordinaten in der Vorschubrichtung 28. Bei einer geführten Detektionsvorrichtung, mit der eine beliebige Bewegung ausgeführt werden kann, werden mit der Koordinatenerfassungseinheit die Koordinaten in der Ebene parallel zur Unterseite des Gehäuses 22 erfasst.

Die erste Sensoreinheit 44 ist als Magnetfeldsensoreinheit zur Detektion einer Stromleitung ausgebildet und wird auch als Stromsensoreinheit bezeichnet. Die zweite Sensoreinheit 45 ist als Sensoreinheit zur Detektion eines beliebigen Objektes im Untergrund ausgebildet und weist ein erstes Sensorelement **49.1,** ein zweites Sensorelement **49.2** und ein drittes Sensorelement **49.3** auf. Die Sensorelemente 49.1-49.3 sind als induktive Sensoren, kapazitive Sensoren, Radarsensoren, Magnetfeldsensoren oder als sonstige, zum Detektieren von Objekten in Untergründen geeignete Sensoren ausgebildet und verschachtelt in zwei Reihen angeordnet. Die Stromsensoreinheit 44 ist zwischen der ersten Reihe der Sensorelemente 49.1, 49.2 und dem Gehäuse 22 der Detektionsvorrichtung 21 angeordnet.

In der Ausführungsform der FIG. 2B sind die Sensorelemente 49.1-49.3 als Radarsensorelemente ausgebildet. Die Radarsensorelemente 49.1-49.3 werden im Messbetrieb so über die Steuer- und Auswerteeinheit 46 gesteuert, dass im Sendemodus immer nur ein Radarsensorelement ein Sendesignal aussendet und im Empfangsmodus alle Radarsensorelemente 49.1-49.3 gleichzeitig ein Empfangssignal empfangen. In einem ersten Teilmessschritt sendet das erste Radarsensorelement 49.1 ein erstes Sendesignal aus und die drei Radarsensorelemente 49.1-49.3 empfangen jeweils ein Empfangssignal. In einem zweiten Teilmessschritt sendet das zweite Radarsensorelement 49.2 ein zweites Sendesignal aus und die drei Radarsensorelemente 49.1-49.3 empfangen jeweils ein Empfangssignal. In einem dritten Teilmessschritt sendet das dritte Radarsensorelement 49.3 ein drittes Sendesignal aus und die drei Radarsensorelemente 49.1-49.3 empfangen jeweils ein Empfangssignal.

Die neun Empfangssignale eines Messschrittes umfassen drei monostatische und sechs bistatische Empfangssignale, wobei monostatisch einen Modus bezeichnet, dass ein Sensorelement sendet und gleichzeitig empfängt, und bistatisch einen Modus, dass ein Sensorelement sendet und ein anderes Sensorelement empfängt. Die neun Empfangssignale werden in der XY-Ebene drei monostatischen und drei bistatischen Flächenbereichen zugeordnet. Jedem Sensorelement 49.1-49.3 ist ein monostatischer Flächenbereich zugeordnet, an dem das zugehörige monostatische Empfangssignal dargestellt wird. Die bistatischen Empfangssignale des ersten und zweiten Sensorelementes 49.1, 49.2 werden gemittelt und das gemittelte Signal wird einem ersten bistatischen Flächenbereich zugeordnet, der zwischen dem ersten und zweiten monostatischen Flächenbereich angeordnet ist. Analog werden die bistatischen Empfangssignale des ersten und dritten Sensorelementes 49.1, 49.3 bzw. des zweiten und dritten Sensorelementes 49.2, 49.3 gemittelt und die gemittelten Signale werden einem zweiten und dritten bistatischen Flächenbereich zugeordnet, wobei der zweite bistatische Flächenbereich zwischen dem ersten und dritten monostatischen Flächenbereich und der dritte bistatische Flächenbereich zwischen dem zweiten und dritten monostatischen Flächenbereich angeordnet ist. Neben der Mittelwertbildung kann aus den bistatischen Empfangssignalen beispielsweise ein Median, ein Maximalwert oder eine gewichtete Summe berechnet werden. Unter dem Begriff "gemitteltes Signal" wird ein Signal verstanden, welches durch eine geeignete mathematische Funktion aus den bistatischen Empfangssignalen berechnet wird.

Die sechs Flächenbereiche, die mit der Vorschubgeschwindigkeit entlang der Vorschubrichtung 28 bewegt werden, bilden in der ersten horizontalen Richtung fünf Empfangskanäle. Während der Vorschubbewegung werden die Empfangssignale erfasst und aus den erfassten Empfangssignalen wird bereits ein Teil eines Tiefenschnittbildes berechnet. Dieser Teil des Tiefenschnittbildes wird über die Echtzeit-Kommunikationsverbindung von der Steuer-und Auswerteeinheit 46 an die Anzeigeeinheit 26 übertragen. Das Tiefenschnittbild wird während der Vorschubbewegung regelmäßig aktualisiert. Die Empfangskanäle bilden die Spuren, in der die Empfangssignale dargestellt und regelmäßig aktualisiert werden.

Um die Zuverlässigkeit beim Detektieren einer Stromleitung zu erhöhen und sicherzustellen, dass ein Empfangssignal tatsächlich durch eine im Untergrund vorhandene Stromleitung erzeugt wird, weist die Stromsensoreinheit 44 eine Modulationseinheit **50** zum Modulieren eines Stromsignals auf. Die Modulationseinheit 50 ist über eine Kommunikationsverbindung **51** mit der Steuer- und Auswerteeinheit 46 verbindbar und ist beispielsweise so ausgebildet, dass sie in eine Steckdose, die im Untergrund vorhanden ist, eingesteckt wird und an eine Phase der Stromleitung koppelt. Die Steuer- und Auswerteeinheit 46 sendet über die Kommunikationsverbindung 51 einen Steuerbefehl an die Modulationseinheit 50, die das Stromsignal mit einem vorgegebenen Muster moduliert. Zum Auswerten der Empfangssignale weist die Steuer- und Auswerteeinheit 46 ein entsprechendes Auswertemodul zum Demodulieren der Empfangssignale auf.

Die in FIG. 2B gezeigte Messeinrichtung 43 umfasst zwei Sensoreinheiten 44, 45, die sich in mindestens einer Sensoreigenschaft voneinander unterscheiden. Die Detektionsvorrichtung 21 kann auch nur mit der Stromsensoreinheit 44 betrieben werden. Durch die Verwendung mehrerer Sensoreinheiten mit unterschiedlichen Sensoreigenschaften können die Qualität und Zuverlässigkeit der Messung erhöht werden.

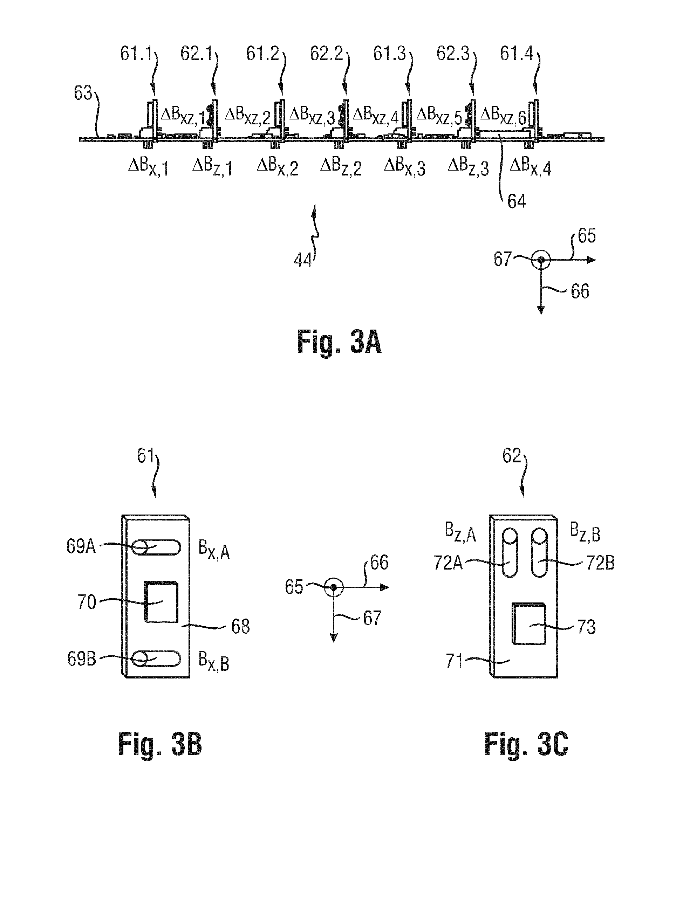

**FIG. 3A** zeigt die Stromsensoreinheit 44 der Detektionsvorrichtung 21 in einer vergrößerten Darstellung. Die Stromsensoreinheit 44 umfasst vier erste Magnetfeldsensorelemente **61.1, 61.2, 61.3, 61.4** und drei zweite Magnetfeldsensorelemente **62.1, 62.2, 62.3,** die abwechselnd auf einer Leiterplatte 63 befestigt sind.

Die Leiterplatte 63 dient als Halteelement zur mechanischen Befestigung und zur elektrischen Verbindung für die ersten und zweiten Magnetfeldsensorelemente 61.1-61.4, 62.1-62.3. Auf der Leiterplatte 63 befindet sich ein Anschlusselement **64,** über das die Leiterplatte 63 mit der Steuer- und Auswerteeinheit 46 verbunden ist. Die ersten und zweiten Magnetfeldsensorelemente 61.1-61.4, 62.1-62.3 sind an zwei zueinander senkrechten, horizontalen Richtungen **65, 66** ausgerichtet. Als Tiefenrichtung **67** ist die zu den horizontalen Richtungen 65, 66 senkrechte Richtung in den Untergrund definiert.

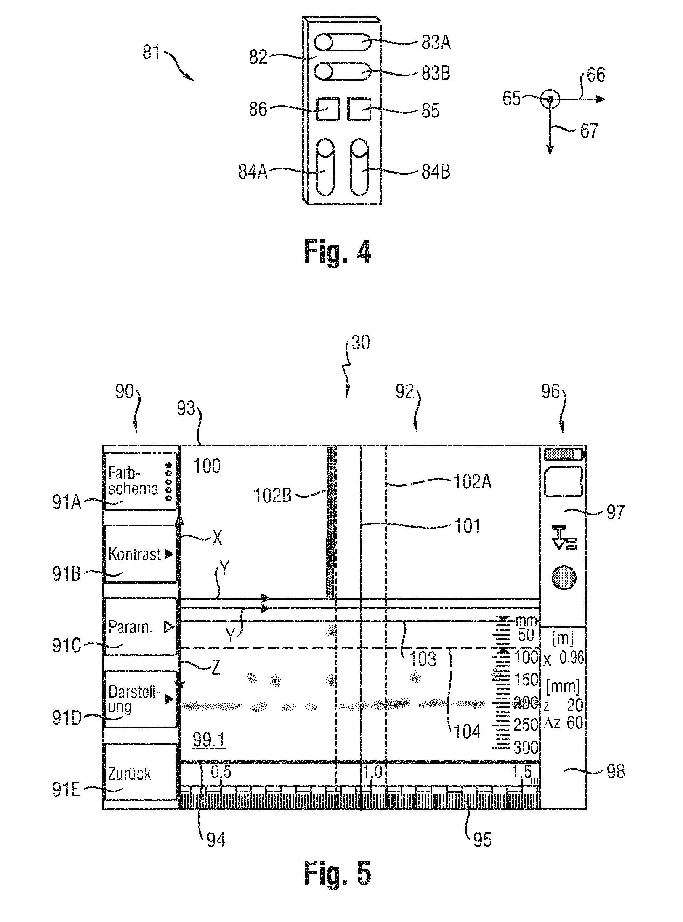

**FIG. 3B** zeigt das erste Magnetfeldsensorelement 61 der Stromsensoreinheit 44 im Detail. Das erste Magnetfeldsensorelement 61 umfasst ein Leiterplattenstück **68,** ein erstes Paar von Magnetfeldsensoren **69A, 69B** und einen Verstärker **70.** Die Magnetfeldsensoren 69A, 69B sind in der Ausführungsform der FIG. 4A als Spulen ausgebildet und entlang der zweiten horizontalen Richtung 66 ausgerichtet. Die Magnetfeldsensoren 69A, 69B sind parallel zueinander, in der Tiefenrichtung 67 beabstandet angeordnet und messen ein magnetisches Wechselfeld **B_{x,A}, 8_{x,B}** (z.B. 50/60 Hz) in der ersten horizontalen Richtung 65.

**FIG. 3C** zeigt das zweite Magnetfeldsensorelement 62 der Stromsensoreinheit 44 im Detail. Das zweite Magnetfeldsensorelement 62 umfasst ein Leiterplattenstück **71,** ein zweites Paar von Magnetfeldsensoren **72A, 72B** und einen Verstärker **73.** Die Magnetfeldsensoren 72A, 72B sind in der Ausführungsform der FIG. 4B als Spulen ausgebildet und entlang der Tiefenrichtung 67 ausgerichtet. Die Magnetfeldsensoren 72A, 72B sind parallel zueinander, in der zweiten horizontalen Richtung 66 beabstandet angeordnet und messen ein magnetisches Wechselfeld **B_{z,A}, B_{z,B}** (z.B. 50/60 Hz) in der Tiefenrichtung 67.

Um bei der Detektion ein homogenes magnetisches Gleichfeld (homogenes Wechselfeld) zu eliminieren, wird zwischen den Magnetfeldsensoren 69A, 69B des ersten Paares ein Differenzwert **ΔBₓ** = B_{x,A} - B_{x,B} und zwischen den Magnetfeldsensoren 72A, 72B des zweiten Paares ein Differenzwert **ΔB_{z}** = B_{z,A} - B_{z,B} berechnet. Aus den Differenzwerten ΔBₓ, ΔB_{z} der benachbarten ersten und zweiten Paare von Magnetfeldsensoren 61.1-61.4, 62.1-62.3 wird ein mittlerer Betrag **ΔB_{xz}=** sqrt[(ΔBₓ)² + (ΔB_{z})² berechnet. Die in FIG. 3B gezeigte Stromsensoreinheit **44** mit vier ersten Magnetfeldsensorelementen 61.1-61.4 und drei zweiten Magnetfeldsensorelementen 62.1-62.3 liefert sechs Messwerte **ΔB_{xz,1} - ΔB_{xz},₆,** die sechs verschiedenen X-Koordinaten entlang der ersten horizontalen Richtung 65 zugeordnet werden. Aus den Messwerten ΔB_{xz,1} - ΔB_{xz,6} ermittelt die Steuer- und Auswerteeinheit 46 den Verlauf der Stromleitung im Untergrund und übermittelt eine horizontale Darstellung (XY-Darstellung) des Untergrundes mit der Stromleitung an die Anzeigeeinheit 26.

Bei der Detektionsvorrichtung 21 der FIG. 2B mit der ersten und zweiten Sensoreinheit 44, 45 sind die ersten und zweiten Magnetfeldsensorelemente 61.1-61.4, 62.1-62.3 abwechselnd entlang der ersten horizontalen Richtung 65 angeordnet und erfassen in der ersten horizontalen Richtung 65 einen Messbereich, der dem Detektionsfeld der zweiten Sensoreinheit 45 entspricht. Die Messergebnisse der ersten und zweiten Sensoreinheit 44, 45 können als getrennte Messaufnahmen oder in einer gemeinsamen Messaufnahme dargestellt werden.

**FIG. 4** zeigt eine alternative Ausführungsform eines Magnetfeldsensorelementes **81,** das die ersten und zweiten Magnetfeldsensorelemente 61.1-61.4, 62.1-62.3 bei der Stromsensoreinheit 44 der FIG. 3A ersetzt. In diesem Fall umfasst die Stromsensoreinheit 44 sieben, identisch aufgebaute Magnetfeldsensorelemente 81, die nebeneinander auf der Leiterplatte 63 angeordnet sind. Das Magnetfeldsensorelement 81 umfasst ein Leiterplattenstück **82,** ein erstes Paar von Magnetfeldsensoren **83A, 83B,** ein zweites Paar von Magnetfeldsensoren **84A, 84B** sowie einen ersten Verstärker **85** für das erste Sensorpaar 83A, 83B und einen zweiten Verstärker **86** für das zweite Sensorpaar 84A, 84B.

Die Magnetfeldsensoren 83A, 83B, 84A, 84B sind als Spulen ausgebildet. Das erste Spulenpaar 83A, 83B ist parallel zueinander, entlang der zweiten horizontalen Richtung 66 ausgerichtet und die Spulen 83A, 83B sind in der Tiefenrichtung 67 voneinander beabstandet angeordnet. Das zweite Spulenpaar 84A, 84B ist parallel zueinander, entlang der Tiefenrichtung 67 ausgerichtet und die Spulen 84A, 84B sind in der zweiten horizontalen Richtung 66 voneinander beabstandet angeordnet. Das erste Spulenpaar 83A, 83B misst einen ersten Differenzwert in der ersten horizontalen Richtung 65 und das zweite Spulenpaar 84A, 84B einen zweiten Differenzwert in der Tiefenrichtung 67.

**FIG. 5** zeigt das Display 30 der Anzeigeeinheit 26 mit einer Messaufnahme der Detektionsvorrichtung 21, die in einer linearen Vorschubbewegung entlang der Vorschubrichtung 28 über den Untergrund bewegt wird. Die Breite der Messaufnahme in X-Richtung ist auf die Breite des Detektionsfeldes beschränkt. Die Breite des Detektionsfeldes wird dem Bediener über die oberen und unteren Markierungen 38A, 38B, 39A, 39B auf dem Gehäuse 22 der Detektionsvorrichtung 21 angezeigt.

Das Display 30 ist während der Anzeige einer Messaufnahme im ersten Betriebsmodus in drei Hauptfelder unterteilt: Am linken Rand des Displays 30 ist in einem ersten Hauptfeld **90** ein Funktionsmenü dargestellt, das bis zu fünf Funktionen **91A-91E** enthält. Jede Funktion 91A-91 E wird durch die links liegende Funktionstaste 36A-36E der zweiten Bedienungseinheit 31 B aktiviert. Ein zweites Hauptfeld **92** ist im mittleren Bereich des Displays 30 angeordnet und dient zur Darstellung der Messaufnahme. Das zweite Hauptfeld 92 ist in drei Teilbereiche unterteilt ist, die untereinander angeordnet sind: In einem oberen Teilbereich **93** ist eine Draufsicht gezeigt, in einem mittleren Teilbereich **94** ein Tiefenschnittbild und in einem unteren Teilbereich **95** eine zugehörige Messskala. Am rechten Rand des Displays 30 sind in einem dritten Hauptfeld **96** verschiedene Informationen für den Bediener dargestellt. Das dritte Hauptfeld 96 ist in einen oberen Statusbereich **97** und einen unteren Informationsbereich **98** unterteilt. Der Statusbereich 97 enthält unter anderem Informationen über einen Ladezustand der Spannungsquelle 48 oder eine Speicherkarte, wobei die Informationen in Form von Piktogrammen im Statusbereich 97 angezeigt werden. Im Informationsbereich 98 werden aktuelle Koordinaten der Messaufnahme angezeigt.

Ein Tiefenschnittbild ist eine zweidimensionale Darstellung der Messergebnisse in einer Ebene, die senkrecht zur XY-Ebene verläuft; auf der vertikalen Achse des Tiefenschnittbildes sind die Tiefenrichtung und auf der horizontalen Achse eine horizontale Richtung in der XY-Ebene aufgetragen. Bei einer linearen Vorschubbewegung entspricht die horizontale Richtung insbesondere der Vorschubrichtung; bei einer handgehaltenen Detektionsvorrichtung oder der Bewegung einer handgeführten Detektionsvorrichtung entlang einer beliebigen Bahn entspricht die horizontale Richtung insbesondere einer durch die Detektionsvorrichtung festgelegten Vorzugsrichtung, beispielsweise einer Gehäusekante. In dem Tiefenschnittbild werden Rohdaten, d.h. die als Hyperbeln ausgebildeten Empfangssignale, oder weiterverarbeitete Empfangssignale dargestellt. Die Empfangssignale werden mit Hilfe von Bildverarbeitungs- und Mustererkennungsverfahren bearbeitet, um Informationen über die Objekte im Untergrund zu gewinnen. In Tiefenschnittbildern, die weiterverarbeitete Empfangssignale verwenden, werden die Objekte geometrisch als Objekte dargestellt; die Form und Größe der Objekte wird durch unterschiedliche Farben angezeigt.

Eine Draufsicht ist eine zweidimensionale Darstellung der Messergebnisse in der XY-Ebene, die aus den Tiefenschnittbildern als Mittelwert, Median, Maximalwert, gewichtete Summe oder sonstige geeignete mathematische Funktion über einen Tiefenbereich zwischen einer ersten und zweiten Tiefe berechnet wird. Dabei wird der Tiefenbereich über die erste und zweite Tiefe oder über eine Schichttiefe und eine Schichtdicke festgelegt. Der Tiefenbereich, über den die Draufsicht gemittelt wird, ist über die Schaltwippe 33 der ersten Bedienungseinheit 31A verstellbar ausgebildet. In der Draufsicht sind nur diejenigen Objekte dargestellt, die innerhalb des eingestellten Tiefenbereichs liegen. Alle anderen Objekte, die sich außerhalb des eingestellten Tiefenbereichs befinden, werden in der Draufsicht nicht dargestellt.

Der mittlere Teilbereich 94 zeigt ein erstes Tiefenschnittbild **99.1,** bei dem die Objekte im Untergrund durch Mustererkennung identifiziert wurden; eine Stromleitung ist im Querschnitt zu erkennen. Das Tiefenschnittbild wird von der Tiefenrichtung Z als vertikaler Achse und der Vorschubrichtung 28 als horizontaler Achse aufgespannt. Neben dem ersten Tiefenschnittbild 99.1 sind weitere Tiefenschnittbilder **99.2-99.5** hinterlegt. Der Übergang zwischen den Tiefenschnittbildern 99.1-99.5 bleibt unbearbeitet oder wird mit bekannten Interpolationsmethoden interpoliert. Der Bediener kann mittels der Schaltwippe 33 zwischen den Tiefenschnittbildern 99.1-99.5 hin- und herwechseln.

Der obere Teilbereich 93 zeigt eine Draufsicht **100,** die aus den Tiefenschnittbildern 99.1-99.5 über einen Tiefenbereich zwischen einer ersten Tiefe **z** und einer zweiten Tiefe **z + Δz** berechnet wurde. Über Mustererkennungsverfahren wurde die Stromleitung in den Empfangssignalen erkannt und als Stromleitung in der Draufsicht 100 dargestellt. Der Bediener kann bei der Farbdarstellung der Tiefenschnittbilder 99.1-99.5 und der Draufsicht 100 zwischen mehreren Farbschemata wählen. Die Farbschemata dienen zur unterschiedlichen Darstellung und zur Anpassung an die Umgebungshelligkeit, sie haben keine weitere Funktion.

Im zweiten Hauptfeld 92 des Displays 30 sind mehrere vertikale und horizontale Markierungslinien angeordnet, die zum Teil über die Schaltwippe 33 verschiebbar sind. FIG. 5 zeigt eine durchgezogene, vertikale Markierungslinie **101,** zwei gepunktete, vertikale Markierungslinien **102A, 102B** sowie eine durchgezogene und eine gestrichelte, horizontale Markierungslinie **103, 104.** Die durchgezogene, vertikale Markierungslinie 101 kennzeichnet die Mitte des Detektionsfeldes und entspricht der Position der Markierungen 40A, 40B an der Ober- und Unterkante des Gehäuses 22. Die gepunktete, vertikale Markierungslinie 102A zeigt die rechte Gehäusekante und die gepunktete, vertikale Markierungslinie 102B die linke Gehäusekante des Gehäuses 22 der Detektionsvorrichtung 21 an. Die durchgezogene, horizontale Markierungslinie 103 legt die Schichttiefe z und die gestrichelte, horizontale Markierungslinie 104 die Schichtdicke Δz des Tiefenbereichs fest. Die in FIG. 5 dargestellte Draufsicht 100 ist über einen Tiefenbereich von 20 mm bis 80 mm gemittelt, die Schichttiefe z beträgt 20 mm und die Schichtdicke Δz beträgt 60 mm. Die Mitte des Detektionsfeldes befindet sich bei der X-Koordinate 0,96 m.

Die in FIG. 5 gezeigte Messaufnahme mit dem Tiefenschnittbild 99.1 und der Draufsicht 100 ist eine gemeinsame Messaufnahme der ersten und zweiten Sensoreinheit 44, 45. Mit Hilfe der in FIG. 3A beschriebenen Stromsensoreinheit 44 kann die räumliche Anordnung einer Stromleitung im Untergrund bestimmt werden; die Stromsensoreinheit 44 eignet sich jedoch nicht dazu, die Tiefe zu bestimmen, in der die Stromleitung in den Untergrund eingebettet ist. Werden die Messergebnisse der Stromsensoreinheit 44 als getrennte Messaufnahme dargestellt, berechnet die Steuer- und Auswerteeinheit 46 eine XY-Darstellung (ein XY-Schnittbild) und überträgt diese XY-Darstellung an die Anzeigeeinheit 26.

Durch die Kombination der Stromsensoreinheit 44 mit der zweiten Sensoreinheit 45 können die Messergebnisse beider Sensoreinheiten 44, 45 als gemeinsame Messaufnahme mit Tiefenschnittbildern und einer Draufsicht dargestellt werden.

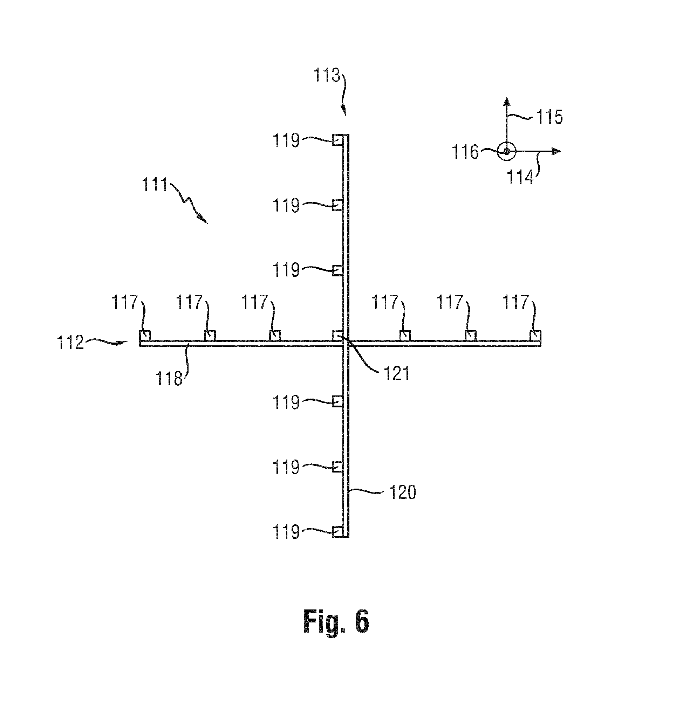

**FIG. 6** zeigt eine weitere Ausführungsform einer Stromsensoreinheit **111,** die sich unter anderem zum Einsatz in einer gehaltenen Detektionsvorrichtung oder einer entlang einer beliebigen Bahn geführten Detektionsvorrichtung eignet, in einer schematischen Darstellung. Die Stromsensoreinheit 111 umfasst eine erste Stromsensoreinheit **112** und eine zweite Stromsensoreinheit **113,** die in zwei zueinander senkrechten, horizontalen Richtungen **114, 115** ausgerichtet sind. Als Tiefenrichtung **116** ist die zu den horizontalen Richtungen 94, 95 senkrechte Richtung in den Untergrund definiert.

Die erste Stromsensoreinheit 112 umfasst sechs Magnetfeldsensorelemente **117,** die auf einem ersten Halteelement **118** angebracht sind. Die Magnetfeldsensorelemente 117 erfassen einen Magnetfeldgradienten in der ersten horizontalen Richtung 114 und in der Tiefenrichtung 116. Die zweite Stromsensoreinheit 113 umfasst sechs Magnetfeldsensorelemente **119,** die auf einem zweiten Halteelement **120** angebracht sind. Die Magnetfeldsensorelemente 119 erfassen einen Magnetfeldgradienten in der zweiten horizontalen Richtung 115 und in der Tiefenrichtung 116. Die Stromsensoreinheiten 112, 113 umfassen ein weiteres Magnetfeldsensorelement **121,** das einen Magnetfeldgradienten in der ersten horizontalen Richtung 114, der zweiten horizontalen Richtung 115 und der Tiefenrichtung 116 erfasst. Das Magnetfeldsensorelement 121 ist auf dem ersten und/oder dem zweiten Halteelement 118, 120 befestigt. Um homogene magnetische Gleichfelder zu eliminieren, sind die Magnetfeldsensorelemente 117, 119, 121 als Gradientensensorelemente ausgebildet.

## Patentansprüche

1. Vorrichtung (1; 21) zum Detektieren einer Stromleitung (11, 12.1-12.3) in einem Untergrund (6) aufweisend
eine Sensoreinheit (44; 111) mit einem Magnetfeldsensorelement (61.1, 62.1; 81; 117, 119, 121), das zum Empfangen eines von den Eigenschaften der Stromleitung (11, 12.1-12.3) und des Untergrundes (6) abhängigen Empfangssignals ausgebildet ist,
eine Steuer- und Auswerteeinheit (46), die zum Steuern der Sensoreinheit (44; 111) und zum Auswerten des Empfangssignals ausgebildet ist, und
eine Anzeigeeinheit (26), die zur Anzeige des von der Steuer- und Auswerteeinheit (46) ausgewerteten Empfangssignals ausgebildet ist,
**dadurch gekennzeichnet, dass**
die Sensoreinheit (44; 111) mindestens ein weiteres Magnetfeldsensorelement (61.2-61.4, 62.2-62.3; 81; 117, 119, 121), das zum Empfangen eines von den Eigenschaften der Stromleitung (11, 12.1-12.3) und des Untergrundes (6) abhängigen Empfangssignals ausgebildet ist, aufweist, wobei die Magnetfeldsensorelemente (61.1-61.4, 62.1-62.3; 81; 117, 119, 121) von der Steuer- und Auswerteeinheit (46) unabhängig steuerbar sind.

2. Vorrichtung nach Anspruch 1, **dadurch gekennzeichnet, dass** die Sensoreinheit (44; 111) erste und zweite Magnetfeldsensorelemente (61.1-61.4, 62.1-62.3; 117, 119) aufweist, wobei die ersten Magnetfeldsensorelemente (61.1-61.4; 117) ein Magnetfeld oder einen Magnetfeldgradienten (ΔBₓ) in einer ersten Richtung (65; 114) und die zweiten Magnetfeldsensorelemente (62.1-62.3; 119) ein Magnetfeld oder einen Magnetfeldgradienten (ΔB_{z}) in einer von der ersten Richtung (65; 114) verschiedenen, zweiten Richtung (67; 116) erfassen.

3. Vorrichtung nach Anspruch 2, **dadurch gekennzeichnet, dass** die ersten und zweiten Magnetfeldsensorelemente (61.1-61.4, 62.1-62.3) entlang einer horizontalen Richtung (65) abwechselnd angeordnet sind.

4. Vorrichtung nach Anspruch 2, **dadurch gekennzeichnet, dass** die Sensoreinheit (44) dritte Magnetfeldsensorelemente aufweist, die ein Magnetfeld oder einen Magnetfeldgradienten in einer von der ersten und zweiten Richtung (65, 67) verschiedenen dritten Richtung (66) erfassen.

5. Vorrichtung nach Anspruch 1, **dadurch gekennzeichnet, dass** die Magnetfeldsensorelemente (81; 117, 119, 121) ein Magnetfeld oder einen Magnetfeldgradienten in einer ersten Richtung (65; 114, 115) und in einer, von der ersten Richtung (65; 94, 95) verschiedenen, zweiten Richtung (67; 116) erfassen.

6. Vorrichtung nach Anspruch 5, **dadurch gekennzeichnet, dass** die Magnetfeldsensorelemente (121) ein Magnetfeld oder einen Magnetfeldgradienten in einer von der ersten und zweiten Richtung (114, 116) verschiedenen dritten Richtung (115) erfassen.

7. Vorrichtung nach einem der Ansprüche 1 bis 6, **dadurch gekennzeichnet, dass** die Magnetfeldsensorelemente (61.1-61.4, 62.1-62.3; 81) jeweils zwei Magnetfeldsensoren (69A, 69B; 72A, 72B; 83A, 83B, 84A, 84B) aufweisen, die parallel zueinander, voneinander beabstandet angeordnet sind.

8. Vorrichtung nach einem der Ansprüche 1 bis 7, **dadurch gekennzeichnet, dass** eine Modulationseinheit (50) vorgesehen ist, die mit der Steuer- und Auswerteeinheit (46) über eine Kommunikationsverbindung (51) verbindbar ist und die auf einen Steuerbefehl der Steuer- und Auswerteeinheit (46) ein Stromsignal der Stromleitung (11, 12.1-12.3) moduliert.

9. Vorrichtung nach Anspruch 8, **dadurch gekennzeichnet, dass** die Steuer- und Auswerteeinheit (46) ein Auswertemodul zum Demodulieren der Empfangssignale aufweist.

10. Vorrichtung nach einem der Ansprüche 1 bis 9, **dadurch gekennzeichnet, dass** eine weitere Sensoreinheit (45) zur Detektion eines Objektes (8, 11, 12.1-12.3) im Untergrund (6) vorgesehen ist.

11. Verfahren zum Detektieren einer Stromleitung (11, 12.1-12.3) in einem Untergrund (6), aufweisend die Schritte
Erfassen eines Empfangssignals durch ein Magnetfeldsensorelement (61.1, 62.1; 81; 117, 119, 121) einer Sensoreinheit (44; 111),
Auswerten des Empfangssignals durch eine Steuer- und Auswerteeinheit (46), und
Anzeigen des ausgewerteten Empfangssignals auf einer Anzeigeeinheit (26), **gekennzeichnet durch** den weiteren Schritt
Erfassen mindestens eines weiteren Empfangssignals **durch** ein weiteres Magnetfeldsensorelement (61.2-61.4, 62.2-62.3; 81; 117, 119, 121) der Sensoreinheit (44; 111).

12. Verfahren nach Anspruch 11, **dadurch gekennzeichnet, dass** ein erster Magnetfeldgradient (ΔBₓ) in einer ersten Richtung (65) und ein zweiter Magnetfeldgradient (ΔB_{z}) in einer zweiten Richtung (67) erfasst werden.

13. Verfahren nach Anspruch 12, **dadurch gekennzeichnet, dass** die Sensoreinheit (44) in einer Vorschubrichtung (28) über den Untergrund (6) bewegt wird, der erste Magnetfeldgradient (ΔBₓ) in einer zur Vorschubrichtung (28) senkrechten horizontalen Richtung (65) erfasst wird und der zweite Magnetfeldgradient (ΔB_{z}) in einer zur Vorschubrichtung (28) und zur ersten horizontalen Richtung (65) senkrechten Tiefenrichtung (67) erfasst wird.

14. Verfahren nach Anspruch 13, **dadurch gekennzeichnet, dass** erste und zweite Magnetfeldsensorelemente (61.1-61.4, 62.1-62.3) in der horizontalen Richtung (65) abwechselnd angeordnet werden und aus dem ersten Magnetfeldgradienten (4Bₓ) und dem zweiten Magnetfeldgradienten (4B_{z}) von benachbarten ersten und zweiten Magnetfeldsensorelementen (61.1-61.4, 62.1-62.3) jeweils ein mittlerer Betrag ΔB_{xz}= sqrt[(ΔBₓ)² + (ΔB_{z})²] berechnet wird.

15. Verfahren nach einem der Ansprüche 11 bis 14, **dadurch gekennzeichnet, dass** aus den mittleren Beträgen (ΔB_{xz,1} - ΔB_{xz,6}) der benachbarten ersten und zweiten Magnetfeldsensorelementen (61.1-61.4, 62.1-62.3) ein horizontale Darstellung von der Steuer- und Auswerteeinheit (46) berechnet, von der Steuer- und Auswerteeinheit (46) an eine Anzeigeeinheit (26) übertragen und auf der Anzeigeeinheit (26) dargestellt wird.

16. Verfahren nach einem der Ansprüche 11 bis 15, **dadurch gekennzeichnet, dass** weitere Empfangssignale durch Sensorelemente (49.1, 49.2, 49.3) einer weiteren Sensoreinheit (45) empfangen werden.

17. Verfahren nach Anspruch 16, **dadurch gekennzeichnet, dass** aus den Empfangssignalen der Sensoreinheit (44) und den Empfangssignalen der weiteren Sensoreinheit (45) durch die Steuer- und Auswerteeinheit (46) gemeinsame Tiefenschnittbilder (99.1) und aus den gemeinsamen Tiefenschnittbildern (99.1) eine gemeinsame Draufsicht (100) berechnet werden.

18. Verfahren nach Anspruch 16, **dadurch gekennzeichnet, dass** aus den Empfangssignalen der Sensoreinheit (44) und den Empfangssignalen der weiteren Sensoreinheit (45) durch die Steuer- und Auswerteeinheit (46) getrennte Tiefenschnittbilder und aus den getrennten Tiefenschnittbildern getrennte Draufsichten berechnet werden.
